# EUROPÄISCHE PATENTSCHRIFT

(11) **EP 1 462 678 B1**
(45) Veröffentlichungstag und Bekanntmachung des Hinweises auf die Patenterteilung: **21.06.2006**
(21) Anmeldenummer: 04006771.2
(22) Anmeldetag: 20.03.2004
(51) Int. Cl.: F16H 45/00

(54) **Hydrodynamische Kupplungsanordnung mit einer Kupplungsvorrichtung innerhalb des Kupplungsgehäuses**
Hydrodynamic clutch arrangement with a clutch device within the clutch housing
Agencement d'accouplement hydrodynamique avec un dispositif d'accouplement dans le carter d'accouplement

(30) Priorität: 28.03.2003 DE 10314331
(43) Veröffentlichungstag der Anmeldung: 29.09.2004
(73) Patentinhaber: ZF FRIEDRICHSHAFEN AG, 88046 Friedrichshafen (DE)
(72) Erfinder: Johann, Herbert, 97078 Würzburg (DE); Schmid, Herbert, 97702 Münnerstadt (DE); Leber, Fritz, 88048 Friedrichshafen (DE)

(56) Entgegenhaltungen:
- DE-A- 2 006 955
- DE-B- 1 625 009
- DE-C- 10 064 682
- US-A- 6 019 202

## Beschreibung

Die Erfindung betrifft eine hydrodynamische Kupplungsanordnung gemäß dem Oberbegriff des Anspruches 1.

Eine solche hydrodynamische Kupplungsanordnung ist aus der DE-Auslegeschritt 1 625 009 bekannt und wird dort durch einen hydrodynamischen Drehmomentwandler gebildet, der mit einem Pumpenrad und einem Turbinenrad sowie mit einem Leitrad zur Bildung eines hydrodynamischen Kreises innerhalb eines Kupplungsgehäuses versehen ist. Dieses Kupplungsgehäuse ist mit seiner einem Antrieb, wie beispielsweise einer Brennkraftmaschine, zugewandten antriebsseitigen Gehäusewandung mit dem Antrieb verbunden, und nimmt abtriebsseitig, also an der einem Getriebe zugewandten Seite, eine Kupplungsvorrichtung auf, über welche eine Wirkverbindung zwischen dem Kupplungsgehäuse und dem Pumpenrad herstellbar oder aber diese Wirkverbindung aufhebbar ist. Die Kupplungsvorrichtung ist ebenso wie eine derselben zugeordnete, über eine Steuerleitung mit einer Druckversorgungsanlage verbundene Steuerkammer innerhalb des Kupplungsgehäuses angeordnet, und verfügt über einen als Trennwand zwischen dem hydrodynamischen Kreis und der Steuerkammer wirksamen Kupplungskolben.

Bei der bekannten hydrodynamischen Kupplungsanordnung ist der Kupplungskolben einerseits durch den in der Steuerkammer anliegenden Druck beaufschlagt, und andererseits durch den Druck des hydrodynamischen Kreises, wobei die beiden Druckbereiche durch an der radialen Außenseite des Kupplungskolbens sowie an dessen radialer Innenseite jeweils vorgesehene Abdichtungen voeinander getrennt sind. Zum Einrücken der Überbrückungskupplung muß in der Steuerkammer ein Überdruck gegenüber dem hydrodynamischen Kreis aufgebaut werden, während zum Ausrücken zumindest eine Druckminderung in der Steuerkammer gegenüber dem hydrodynamischen Kreis oder gar eine Druckabsenkung auf Atmosphärendruck vorzunehmen ist. Aufgrund der großen Druckunterschiede in der Steuerkammer zwischen Ein- und Ausrücken leidet nicht nur die Auslenkbereitschaft des Kupplungskolbens, es ist auch ein erhebliches Maß an Energie bereitzustelfen. Eine vergleichbare Situation bezüglich des Kupplungskolbens findet sich auch bei der hydrodynamischen Kupplungsanordnung gemäß der DE 100 64 682 C1, wobei dieser Kupplungskolben allerdings einer zur Umgehung des hydrodynamischen Kreises dienenden Überbrückungskupplung zugeordnet ist, und nicht einer zwischen Kupplungsgehäuse und Pumpenrad wirksamen Kupplungsvorrichtung.

In der DE Offenlegungsschrift 2 006 955 ist eine ähnliche Kupplungsanordnung wie bei der DE-Auslegeschrift 1 625 009 behandelt, die zwar ebenfalls eine in das Kupplungsgehäuse integrierte Kupplungsvorrichtung aufweist, bei der sich jedoch die Steuerkammer für einen Kupplungskolben ebenso wie der Kupplungskolben selbst in einem getriebeseitig vorgesehenen Gehäuseansatz an dem Kupplungsgehäuse und damit außerhalb desselben befinden. Dadurch wird ein eigener hydraulischer Druckkreis zum Ein- oder Ausrücken der Kupplungsvorrichtung notwendig, und auch ein Übertragungselement, um die Bewegung des Kupplungskolbens auf ein Anpreßelement für Lamellen der Kupplungsvorrichtung zu übertragen, wobei dieses Übertragungselement eine entsprechende Ausnehmung im Kupplungsgehäuse durchgreift. Die hydrodynamische Kupplungsanordnung wird somit konstruktiv aufwendig und energetisch ungünstig. Des Weiteren ist von einem erhöhten Bauraumbedarf auszugehen, der auch bei Arbeitsmaschinen grundsätzlich zu vermeiden ist.

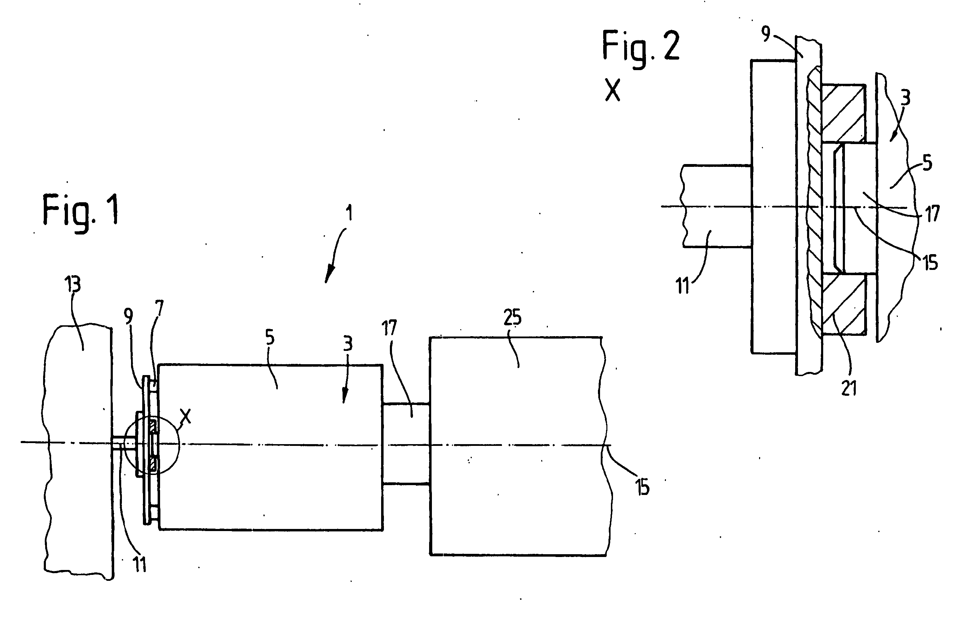

Die gleiche Problematik findet sich auch bei der hydrodynamischen Kupplungsanordnung gemäß der US 6 019 202 A, die allerdings zusätzlich zur Kupplungsvorrichtung zwischen Kupplungsgehäuse und Pumpenrad auch eine Überbrückungskupplung zur Umgehung des hydrodynamischen Kreises aufweist. Die US-Patentschrift gibt zwar keinen Hinweis auf die konstruktive Ausbildung der Kupplungsvorrichtung, jedoch lässt die zeichnerische Darstellung den Schluss zu, dass die Kupplungsvorrichtung, wenn auch zwischen Kupplungsgehäuse und Pumpenrad wirksam, im Gegensatz zu der Überbrückungskupplung nicht in das Kupplungsgehäuse integriert ist. Dies hat zur Folge, dass, wie auch aus Fig. 1 der US-Patentschrift erkennbar ist, ein eigener hydraulischer Druckkreis zum Ein- oder Ausrücken der Kupplungsvorrichtung zwingend vorgesehen sein muss.

Eine hydrodynamische Kupplungsanordnung wie bei der US-Patentschrift ist mit Vorzug bei Arbeitsmaschinen, wie beispielsweise bei Schaufelbaggem, einsetzbar, da bei diesen Arbeitsmaschinen eine kombinierte Fahr und Hubbewegung gefordert ist, wobei die Hubbewegung auf die Schaufel bezogen ist. So kann durch zumindest teilweises Ausrücken der Kupplungsvorrichtung die Übertragung des vom Antrieb eingeleiteten Drehmomentes auf das Pumpenrad und damit auf den hydrodynamischen Kreis reduziert werden, sodass lediglich noch ein Restmoment die hydrodynamische Kupplungsanordnung abtriebsseitig verlassen kann und zum nachfolgenden Getriebe geleitet wird. Die Folge hiervon ist ein für die Fahrbewegung der Arbeitsmaschine verfügbares, minimales Drehmoment, während der Hauptanteil des vom Antrieb gelieferten Drehmomentes an einer beliebig wählbaren Verzweigungsstelle für die Hubbewegung der Schaufel bereitgestellt werden kann. Verständlicherweise wird bei diesem Betriebszustand die zwischen Kupplungsgehäuse und Turbinenrad wirksame Überbrückungskupplung ausgerückt sein, um eine Übertragung des vom Antrieb gelieferten Drehmomentes auf das Getriebe zu vermeiden.

Wird dagegen keine Schaufelbewegung gefordert, sondem bevorzugt eine Fahrbewegung der Arbeitsmaschine, so wird die Kupplungsvorrichtung eingerückt, sodass auf das Kupplungsgehäuse geleitetes Drehmoment, wie bei hydrodynamischen Drehmomentwandlern üblich, entweder über den hydrodynamischen Kreis oder über die Überbrückungskupplung zum Getriebe übertragen werden kann.

Der Erfindung liegt die Aufgabe zugrunde, eine hydrodynamische Kupplungsanordnung mit einer Kupplungsvorrichtung zwischen einem Kupplungsgehäuse und einem Pumpenrad derart auszubilden, dass sich die gewünschte Funktionalität bei minimalem Konstruktions- und Bauraumaufwand und gleichzeitiger Gewährleistung eines hohen energetischen Wirkungsgrades ergibt.

Diese Aufgabe wird erfindungsgemäß durch die im Kennzeichen des Anspruches 1 angegebenen Merkmale gelöst. Durch Integration der Kupplungsvorrichtung innerhalb des Kupplungsgehäuses kann die Kupplungsvorrichtung an die gleiche Druckversorgungsanlage wie beispielweise auch der hydrodynamische Kreis oder eine gegebenenfalls vorhandene Überbrückungskupplung angeschlossen sein, sodass diesbezüglich kaum Mehraufwand gegenüber einer hydrodynamischen Kupplungsanordnung ohne eine derartige Kupplungsvorrichtung entsteht.

Diese Integration der Kupplungsvorrichtung in das Kupplungsgehäuseist besonders vorteilhaft, wenn eine axial zwischen einem Kupplungskolben der Kupplungsvorrichtung und einer abtriebsseitigen Gehäusewandung des Kupplungsgehäuses vorgesehene Steuerkammer derart an die Druckversorgungsanlage angeschlossen ist, dass die Steuerkammer entweder mit dem im hydrodynamischen Kreis anliegenden Druck die entsprechende Seite des Kupplungskolbens beaufschlagt, oder aber im Wesentlichen drucklos ist. Solange in der Steuerkammer im wesentlichen der gleiche Druck wie im hydrodynamischen Kreis anliegt, ist der Kupplungskolben beidseits dem gleichen Druck unterworfen und somit praktisch ausgerückt, da er in diesem Betriebszustand keine Anpresskraft auf den Übertragungsbereich der Kupplungsvorrichtung ausüben kann, die beispielsweise in Form einer Lamellenkupplung realisiert ist. Auch sind bei einer derartigen Betriebsweise keine Abdichtungsmaßnahmen zwischen hydrodynamischem Kreis und Steuerkammer erforderlich, da bei Druckgleichheit keine wesentliche Verlagerung von Fördermedium zwischen dem hydrodynamischen Kreis und der Steuerkammer zu erwarten ist.

Wird die Steuerkammer dagegen durch Umsteuerung der Druckversorgungsanlage im wesentlichen drucklos gemacht, so wird der an der Seite des hydrodynamischen Kreises nun anliegende Überdruck den Kolben in Richtung der bereits erwähnten Lamellenkupplung belasten, sodass aufgrund der dann jeweils im Reibbereich der Lamellen herrschenden hohen Flächenpressung die Reibflächen eine hinreichende Dichtfunktion übernehmen, insbesondere, wenn zumindest eine der mit Flächenpressung aneinander liegenden Reibflächen mit einem Reibbelag versehen ist. Aber selbst für den Fall, dass entweder die Reibfläche und/oder eine Gegenreibfläche mit Aussparungen, wie beispielsweise Nutungen, zum Durchfluss von Fördermedium zugunsten einer Kühlungsfunktion der Reibflächen versehen sein sollte, handelt es sich bei dem auf diese Weise die Lamellenkupplung durchdringenden Volumenstrom lediglich um eine Restleckage, welche einerseits an den Druckverhältnissen zwischen hydrodynamischem Kreis und Steuerkammer wenig zu ändern vermag, und andererseits problemlos bei der Versorgung des hydrodynamischen Kreises mit frischem Fördermedium wieder aufgefüllt werden kann.

Bei der zuvor geschilderten Ausführung der Kupplungsvorrichtung genügt demnach eine Druckversorgungsanlage, die maximal die Steuerkammer mit einem Druck beaufschlagen muss, der nicht über den Druck im hydrodynamischen Kreis hinausgeht. Hierdurch hält sich sowohl der pumpenmäßige Aufwand als auch die Notwendigkeit von Abdichtmaßnahmen in denjenigen Grenzen, die an der Druckversorgungsanlage im Hinblick auf den hydrodynamischen Kreis ohnehin realisiert sein müssen.

Falls die zuvor erwähnte Restleckage durch die Lamellenkupplung insbesondere bei Ausbildung von Reibflächen mit Aussparungen entlang der gesamten radialen Erstreckungsrichtungsweite der Reibflächen erfolgen sollte, werden erfindungsgemäß Abdichtungsmaßnahmen vorgeschlagen. So besteht beispielsweise die Möglichkeit, an der Steuerkammer einerseits durch Abdichtungen im inneren Radialbereich des Kupplungskolbens sowie in dessen radial mittleren oder radial äußeren Radialbereich eine druckfeste Trennung gegenüber dem hydrodynamischen Kreis zu erwirken, andererseits aber den Kupplungskolben in einem außerhalb der Abdichtungen liegenden Radialbereich mit Strömungsdurchlässen auszubilden, die in Strömungsverbindung mit den in Reibflächen vorgesehenen Aussparungen stehen. Auf diese Weise kann sich ein räumlich begrenzter Volumenstrom bilden, der für einen begrenzten Durchfluss viskosen Fördermediums durch die Aussparungen der Reibflächen sorgt, und zwar in Abhängigkeit von eventuellen Druckdifferenzen im Strömungsbereich.

Es sind unterschiedliche konstruktive Ausgestaltungen der Kupplungsvorrichtung vorstellbar. Zum Einen kann der Kupplungskolben mit der Pumpenradnabe drehfest, aber axial verlagerbar sein und eine Anbindung tragen, die als Lamellenträger für die Lamellenkupplung dient. Ebenso ist vorstellbar, die als Lamellenträger wirksame Anbindung an der Pumpenradschale zu befestigen und den Kolben drehfest, aber axial verlagerbar, auf einer abtriebsseitigen Gehäusenabe des Kupplungsgehäuses anzuordnen. Bei beiden Ausgestaltungen erfolgt die jeweils drehfeste, aber axial verlagerbare Verbindung des Kolbens mit dem denselben tragenden Bauteil vorzugsweise mittels einer Axialverzahnung, der jeweils eine Abdichtung zur druckdichten Trennung von hydrodynamischem Kreis und Steuerkammer sowie ein Axialanschlag zur Begrenzung der axialen Verlagerbarkeit des Kolbens zugeordnet sein können. Sowohl die Abdichtung als auch der Axialanschlag sind mit Vorzug jeweils im Bereich des Kupplungskolbenfußes angeordnet. Ergänzt werden kann diese Einrichtung durch eine Axialfeder, die sich einerends an dem Axialanschlag und anderenends am Kupplungskolben abstützt, und diesen somit in Richtung zur Lamellenkupplung stets leicht vorgespannt hält. Damit sorgt die Axialfeder für eine unterbrechungsfreie Anlage des Kolbens an der Lamellenkupplung, was nicht nur für eine stetige Wirkverbindung einzelner Lamellen untereinander sorgt, sondern auch der abtriebsseitig letzten Lamelle mit der benachbarten abtriebsseitigen Kupplungswandung. Mit dieser Konstruktion wird zwingend sichergestellt, dass selbst in denjenigen Betriebsphasen, in denen die Steuerkammer mit dem gleichen Druck wie der hydrodynamische Kreis beaufschlagt ist, dem Kupplungskolben eine eindeutig definierte Position zugeordnet ist.

In einer weiteren Ausgestaltungsform werden die Vorteile der Kupplung speziell zum Kaltstart der Antriebsmaschine verwendet. Da die Kupplung durch den Wandlerinnendruck geschlossen wird, ist die Kupplung im drucklosen Zustand, somit beim Stillstand der Antriebsmaschine geöffnet. Die Antriebsmaschine lässt sich ohne den Wiederstand des hydrodynamischen Wandlers anfahren, da das Pumpenrad bei geöffneter Kupplung stillsteht. Erreicht die Antriebsmaschine eine ausreichende Drehzahl, wird der Wandler mit Öl befüllt, wodurch sich ein Innendruck aufbaut, welcher automatisch die Kupplung schließt und somit das Pumpenrad antreibt. Die Kupplung überträgt so lange Drehmoment, bis der Gegendruck auf der anderen Seite des Kolbens den Wandlerinnendruck erreicht und die Verbindung von der Antriebsmaschine zum Pumpenrad trennt.

Die vorliegende Erfindung wird nachfolgend mit Bezug auf die Zeichnung anhand bevorzugter Ausgestaltungsformen detailliert beschrieben.

Es zeigen:
- Fig. 1: ein Prinzip-Schaltbild eines Antriebsstranges mit einem Antrieb, einer Kupplungsanordnung und einem Getriebe;
- Fig. 2: eine vergrößerte Herauszeichnung einer in Fig. 1 gezeigten Einzelheit X;
- Fig. 3: eine Längsschnittansicht der Kupplungsanordnung mit einer einen Kupplungskolben aufweisenden Kupplungsvorrichtung, wobei der Kolben eine als Lamellenträger für Lamellen einer Lamellenkupplung dienende Anbindung aufnimmt;
- Fig. 4: wie Fig. 3, aber mit einer an einem Pumpenrad der Kupplungsanordnung befestigten Anbindung als Lamellenträger;
- Fig. 5: eine Darstellung eines Reibbereiches der Kupplungsvorrichtung in Fig. 3 gemäß der Schnittlinie III-III;
- Fig. 6: wie Fig. 4, aber mit Abdichtmaßnahmen am Kupplungskolben radial mittig und radial innen;
- Fig. 7: eine Darstellung eines Reibbereiches der Kupplungsvorrichtung in Fig. 6 gemäß der Schnittlinie VI-VI;
- Fig. 8: wie Fig. 6, aber mit einer Axialfeder am Kupplungskolben und
- Fig. 9: eine vergrößerte Herauszeichnung einer in Fig. 6 gezeigten Einzelheit Y.

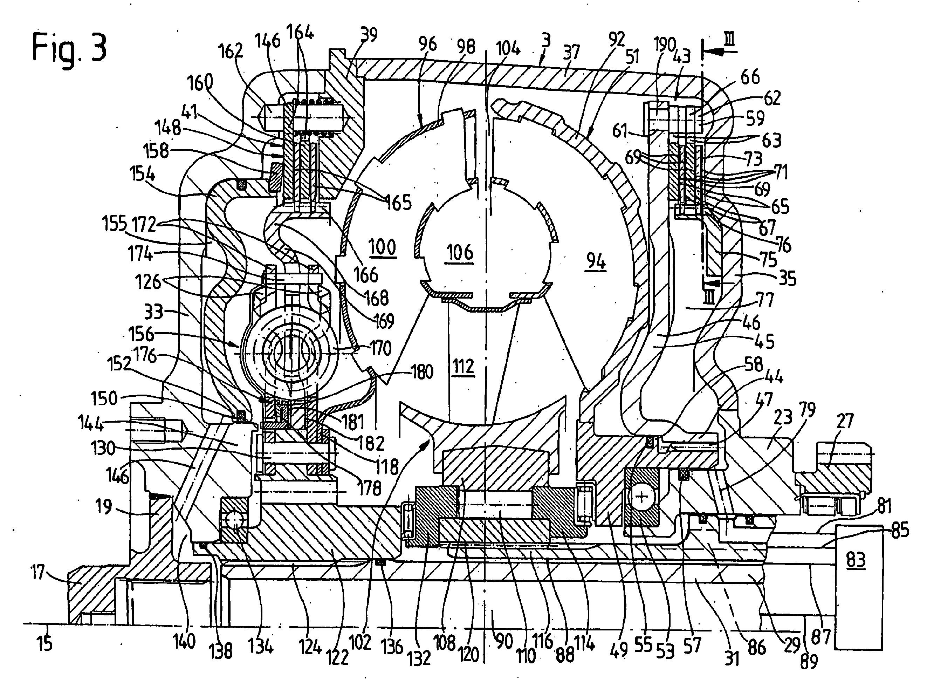

In Fig. 1 ist ein Antriebsstrang 1 mit einer erfindungsgemäßen Kupplungsanordnung 3 schematisch dargestellt. Die Kupplungsanordnung 3 umfasst ein Kupplungsgehäuse 5, das über eine Mehrzahl von Befestigungselementen 7 und ein Kopplungselement 9, wie z. B. eine Flexplatte, mit einem Antrieb 11, beispielsweise der Kurbelwelle einer Brennkraftmaschine 13, zur gemeinsamen Drehung gekoppelt werden kann und, wie in Fig. 2 deutlich gezeigt, im Bereich einer Drehachse 15 einen Lagerzapfen 17 aufweist, der an einer antriebsseitigen Gehäusenabe 19 (Fig. 3) ausgebildet und in einer am Antrieb 11 ausgebildeten Zentrierführung 21 aufgenommen ist. An der vom Antrieb 11 entfernt liegenden Axialseite weist das Kupplungsgehäuse 5 gemäß Fig. 3 eine abtriebsseitige Gehäusenabe 23 auf, die über ein Zahnrad 27 eine nicht gezeigte Fluidförderpumpe zur Drehung antreibt. Zur abtriebsseitigen Gehäusenabe 23 konzentrisch angeordnet ist ein Abtriebsorgan 29, das mit seinem freien Ende in das Kupplungsgehäuse 5 ragt. Dieses Abtriebsorgan 29 kann beispielsweise eine Getriebeeingangswelle 31 eines Getriebes 25 (Fig. 1) sein.

Das Kupplungsgehäuse 5 weist eine sich von der antriebsseitigen Gehäusenabe 19 aus im wesentlichen nach radial außen erstreckende antriebsseitige Gehäusewandung 33 und eine sich von der abtriebsseitigen Gehäusenabe 23 aus im Wesentlichen nach radial außen erstreckende abtriebsseitige Gehäusewandung 35 auf. An der abtriebsseitigen Gehäusewandung 35 ist im radial äußeren Bereich eine die beiden Gehäusewandungen 30, 35 axial miteinander verbindende Gehäuseaußenschale 37 angeformt, die über ein Widerlager 39 für eine noch zu beschreibende Überbrückungskupplung 41 an der antriebsseitigen Gehäusewandung 33 befestigt ist.

Wie aus Fig. 3 erkennbar ist, verfügt die Kupplungsanordnung 3 innerhalb des Kupplungsgehäuses 5 über eine Kupplungsvorrichtung 43, die mit einem Kupplungskolben 45 versehen ist. Dieser ist mit seinem Kupplungskolbenfuß 44 über eine zwischen dem Kupplungskolbenfuß 44 und einer Pumpenradnabe 49 eines Pumpenrades 51 ausgebildete Verzahnung 47 mit der Pumpenradnabe 49 und damit auch mit dem Pumpenrad 51 in drehfester, aber axial verlagerbarer Verbindung. Im Erstreckungsbereich des Kupplungskolbenfußes 44 axial benachbart zur Verzahnung 47 ist ein Axialanschlag 58 für den Kupplungskolben 45 an der Pumpenradnabe 49 vorgesehen, um die zuvor erwähnte Axialverlagerbarkeit des Kupplungskolbens 45 zu begrenzen. Des Weiteren ist, radial zwischen dem Kupplungskolbenfuß 44 und der Pumpenradnabe 49 wirksam, eine Abdichtung 55 in der Pumpenradnabe 49 eingelassen, wobei durch diese Abdichtung 55 für die erforderliche Druckdichtigkeit der beidseits des Kupplungskolbens 45 vorgesehenen Räume gesorgt ist, von denen der dem Pumpenrad 51 zugewandte Raum Teil eines hydrodynamischen Kreises 104 ist, und der zwischen der Gegenseite des Kupplungskolbens 45 und der benachbarten, abtriebsseitigen Gehäusewandung 35 nachfolgend als Steuerkammer 77 bezeichnet ist.

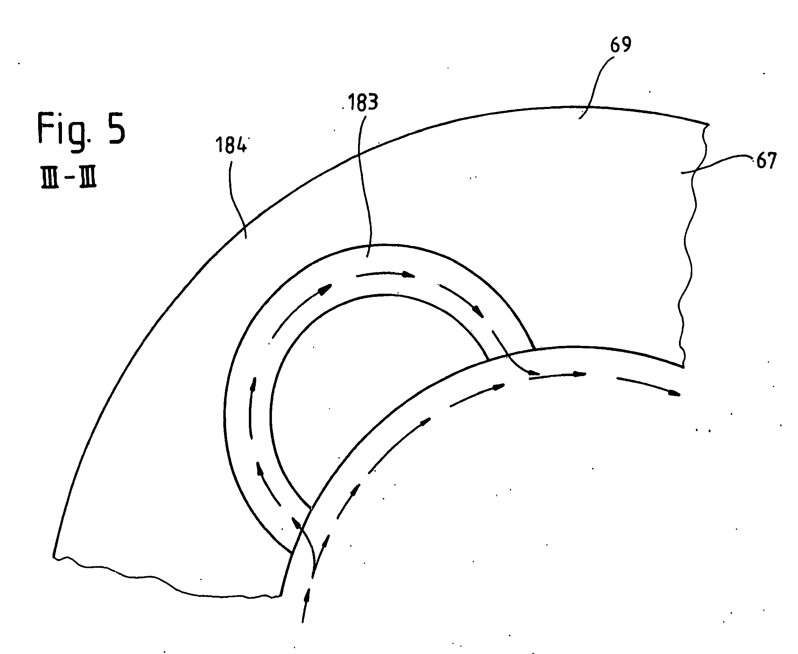

Der Kupplungskolben 45 verfügt im radial äußeren Bereich über eine Mehrzahl von Bohrungen 61, die zur Aufnahme jeweils einer zapfenförmigen Anbindung 190 dienen. Diese übernimmt die Funktion eines Außenlamellenträgers 62 für Außenlamellen 63, die mit Innenlamellen 65 in Wirkverbindung bringbar sind und gemeinsam mit diesen eine Lamellenkupplung 66 bilden. Zumindest die Innenlamellen 65 sind bei diesem Ausführungsbeispiel beidseitig mit Reibbelägen 67 ausgebildet, die somit Reibflächen 69 bilden und mit Gegenreibflächen 71 an den Außenlamellen 63 sowie an der abtriebsseitigen Gehäusewandung 35 zusammenwirken. Die abtriebsseitig letzte Reibfläche 69 steht zumindest bei eingerückter Kupplungsvorrichtung 43, also bei soweit als möglich an die abtriebsseitige Gehäusewandung 35 angenähertem Kupplungskolben 45, mit der Gegenreibfläche 71 der abtriebsseitigen Gehäusewandung 35 in Eingriff. Auf diese Weise übernehmen die Reibflächen 69 der Lamellenkupplung 66 in Verbindung mit den Gegenreibflächen 71 die Funktion einer radial äußeren Abdichtung 73 der Steuerkammer 77, zumal wenn gemäß Fig. 5 die Reibbeläge 67 lediglich an einer Radialseite mit nutungsförmigen Aussparungen 183 zum Durchgang kühlenden viskosen Fördermediums versehen sind, und an der anderen Radialseite, im vorliegenden Beispiel an der radialen Außenseite, über einen in Umfangsrichtung unterbrechungsfreien Belaganteil 184 verfügen.

Zurückkommend auf die Lamellenkupplung 66, stehen die Innenlamellen 65 über eine Verzahnung 76 in drehfester Verbindung mit einer als Innenlamellenträger 75 dienenden Halterung, die an der abtriebsseitigen Gehäusewandung 35 befestigt ist.

Da die Steuerkammer 77 antriebsseitig durch den als Trennwand 46 wirksamen Kupplungskolben 45, nach radial außen durch die Lamellenkupplung 66 und in Richtung zum Getriebe durch die abtriebsseitige Gehäusewandung 35 im wesentlichen druckdicht begrenzt ist, verbleibt lediglich der radial innere Bereich der Steuerkammer 77 für eine Verbindung mit einer lediglich schematisch eingezeichneten Druckversorgungsanlage 83. Hierzu sind in der abtriebsseitigen Gehäusenabe 23 bohrungsförmige Anschlüsse 79 enthalten, die in eine erste Steuerleitung 81 münden, welche an die Druckversorgungsanlage 83 angeschlossen ist.

Die Funktionsweise der Kupplungsvorrichtung 43 ist wie folgt:

Ein vom Antrieb 11 auf das Kupplungsgehäuse 5 geleitetes Drehmoment soll durch Einrücken der Kupplungsvorrichtung 43 auf das Pumpenrad 51 übertragen werden. Hierzu wird die Druckversorgungsanlage 83 über die erste Steuerleitung 81 und die Anschlüsse 79 für ein Druckniveau in der Steuerkammer 77 sorgen, welches unterhalb des Druckniveaus im hydrodynamischen Kreis 104 liegt. Bevorzugt kann die Steuerkammer 77 hierbei drucklos, das heißt lediglich im wesentlichen mit Atmosphärendruck beaufschlagt sein. Der Kupplungskolben 46 wird unter der Wirkung des Überdruckes im hydrodynamischen Kreis 104 in Richtung zur abtriebsseitigen Gehäusewandung 35 gepresst und beaufschlagt dadurch die zwischen ihm und dieser Gehäusewandung 35 vorhandenen Lamellen 63, 65 der Lamellenkupplung 66 mit hinreichend hoher Flächenpressung, die für die Übertragung des Drehmomentes benötigt wird. Das am Kupplungsgehäuse 5 und somit am Innenlamellenträger 75 anliegende Drehmoment wird auf die Innenlamellen 65 und von diesen über die Außenlamellen 63 und den Außenlamellenträger 62 auf den Kupplungskolben 45 übertragen, der das Moment seinerseits über die Verzahnung 47 am Kupplungskolbenfuß 44 auf die Pumpenradnabe 49 überträgt.

Zum Ausrücken der Kupplungsvorrichtung 43 wird durch die Druckversorgungsanlage 83 die erste Steuerleitung 81 mit einem Druck beaufschlagt, der im wesentlichen demjenigen des hydrodynamischen Kreises 104 entspricht, sodass über die Anschlüsse 79 auch die Steuerkammer 77 entsprechend druckbeaufschlagt ist. Auf den Kupplungskolben 45 wirkt somit keine definierte Druckdifferenz mehr, wodurch zwischen den Lamellen 63, 65 der Lamellenkupplung 66 gerade noch so geringe Flächenpressungen wirksam sind, dass nur noch geringe Schleppmomente in der zuvor beschriebenen Weise über die Lamellenkupplung 66 auf den Kupplungskolben 45 und von diesem auf die Pumpenradnabe 49 übertragbar sind.

Selbstverständlich kann die Druckversorgungsanlage 83 über die erste Steuerleitung 81 und die Anschlüsse 79 die Steuerkammer 77 auch mit Drücken beaufschlagen, die betragsmäßig zwischen den beiden zuvor erwähnten Extremen angesiedelt sind. .

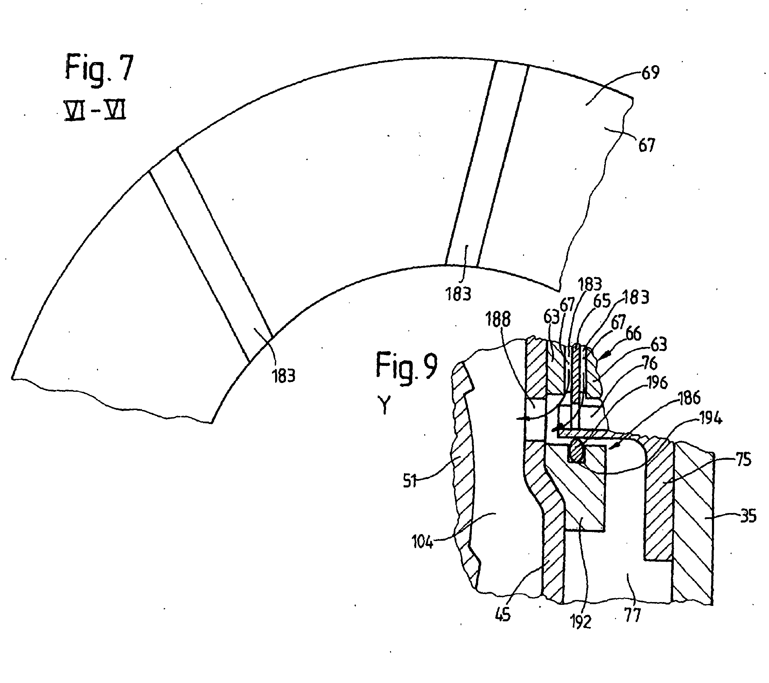

Sollte bei starkem Schlupf im Bereich der Lamellenkupplung 66 eine starke Aufheizung von Reibflächen 69 und Gegenreibflächen 71 erfolgen, ist auch eine Ausbildung der Reibbeläge 67 gemäß Fig. 7 mit Aussparungen 183 denkbar, welche den gesamten radialen Erstreckungsbereich der Reibbeläge 67 und damit der Reibbereiche 69 durchmessen. Zwar ist bei einer derartigen Ausgestaltung der Reibbeläge 67 mit einem begrenzten Volumenstrom aus dem hydrodynamischen Kreis 104 in die Steuerkammer 77 zur rechnen, sofern deren Druckniveau unterhalb desjenigen des hydrodynamischen Kreises 104 liegt, jedoch kann dieser Volumenstrom, der im Vergleich zum Volumenstrom des hydrodynamischen Kreises 104 lediglich eine "Restleckage" bildet, problemlos bei der Versorgung des hydrodynamischen Kreises 104 mit frischem viskosen Fördermedium ausgeglichen werden. Bezüglich der Kupplungsvorrichtung 43 an sich ergeben sich bei einer derartigen konstruktiven Lösung keine Nachteile, da bei eingerückter Kupplungsvorrichtung 43 diese in die Steuerkammer 77 eindringende Restleckage problemlos über die Anschlüsse 79 zur Druckversorgungsanlage 83 abströmen kann, sodass die benötigte Druckdifferenz beidseits des Kupplungskolbens 45 erhalten bleibt, während bei ausgerückter Kupplungsvorrichtung 43 aufgrund gleicher Druckverhältnisse beidseits des Kupplungskolbens 45 ohnehin kein Abdichtungsbedarf besteht.

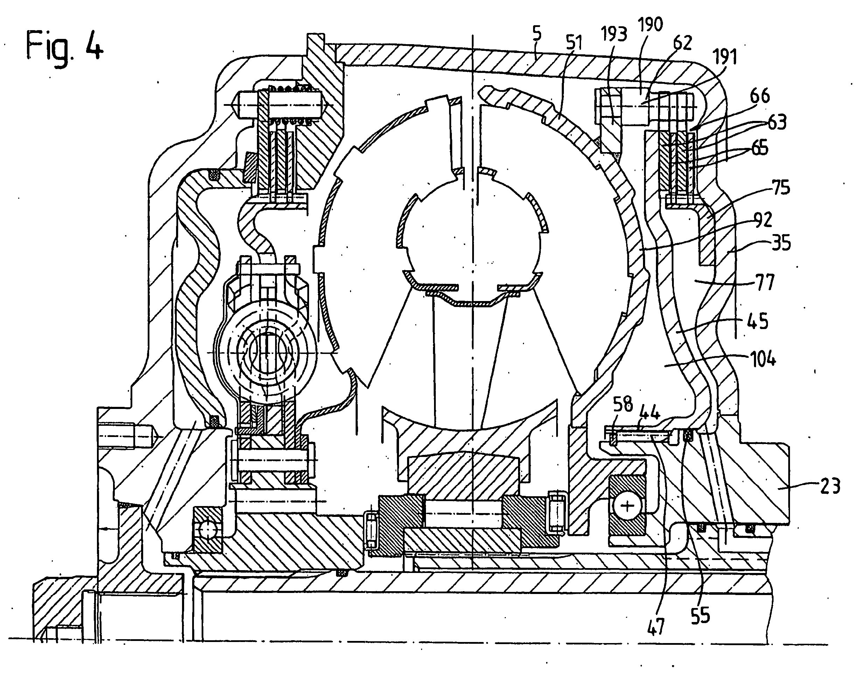

Bevor nachfolgend auch der restliche Teil der erfindungsgemäßen hydrodynamischen Kupplungsanordnung 3 erläutert werden soll, sei noch kurz auf weitere Ausgestaltungen der erfindungsgemäßen Kupplungsvorrichtung 43 eingegangen. So zeigt Fig. 4 eine Ausführung, bei welcher der Kupplungskolben 45 auf der abtriebsseitigen Gehäusenabe 23 angeordnet ist, und zwar mittels der Verzahnung 47, die eine drehfeste, aber axial verlagerbare Aufnahme des Kupplungskolbens 45 über dessen Kupplungskolbenfuß 44 gestattet. Auch bei dieser Ausführung ist ein Axialanschlag 58 zur Begrenzung des Axialweges des Kupplungskolbens 45 sowie eine Abdichtung 55 zwischen dem hydrodynamischen Kreis 104 und der Steuerkammer 77 vorhanden.

Radial außen ist am Pumpenrad 51 und insbesondere hierbei an dessen Pumpenradschale 92 die als Lamellenträger 62 dienende Anbindung 190 vorgesehen. Anders als bei der Ausführung gemäß Fig. 3 ist hier die Anbindung 190 allerdings mehrteilig ausgebildet, und zwar mit einem an der Pumpenradschale 92 befestigten Anbindungsstumpf 193 und einem an demselben aufgenommenen Zapfen 191. Am Letztgenannten greifen die Außenlamellen 63 der Lamellenkupplung 66 an, sodass auch bei dieser Ausführung die Anbindung 190 als Au-ßenlamellenträger 62 wirksam ist. Die Innenlamellen 65 sind in bereits bekannter Weise drehfest mit dem an der abtriebsseitigen Gehäusewandung 35 befestigen Innenlamellenträger 75 verbunden.

Bei dieser Ausführung wird ein am Kupplungsgehäuse 5 anliegendes Drehmoment über den Innenlamellenträger 75 und die Lamellen 65, 63 sowie den Außenlamellenträger 62 auf das Pumpenrad 51 übertragen. In gleicher Weise wie bei der Ausführung gemäß Fig. 3 ist hierbei der Druck in der Steuerkammer 77 zwischen dem Druckniveau des hydrodynamischen Kreises 104 und einem drucklosen Zustand variierbar.

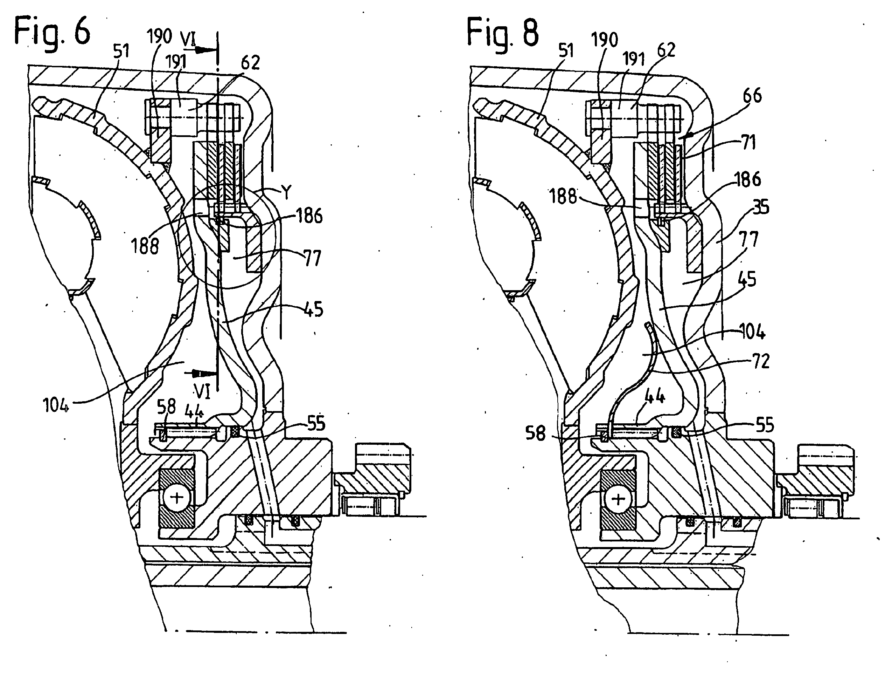

Die in Fig. 4 gezeigte Ausführung der Kupplungsvorrichtung 43 wird in Fig. 6 weitergebildet, indem dort, wie eine vergrößerte Herauszeichnung in Fig. 9 zeigt, am Kupplungskolben'45 in dessen mittleren Radialbereich eine radial äußere Abdichtung 186 vorgesehen ist, durch welche die Steuerkammer 77 gegenüber dem hydrodynamischen Kreis 104 abgedichtet ist. Diese Abdichtung 186 lässt auch eine Betriebsweise zu, bei welcher in der Steuerkammer 77 zum Ausrücken der Kupplungsvorrichtung 43 ein höherer Druck angelegt wird als im hydrodynamischen Kreis 104. Zum Einrücken der Kupplungsvorrichtung 43 kann Druckgleichheit im hydrodynamischen Kreis 104 und in der Steuerkammer 77 bestehen, oder aber ein gegenüber dem hydrodynamischen Kreis geringerer Druck in der Steuerkammer 77. Radial außerhalb der Abdichtung 186 sind Strömungsdurchlässe 188 im Kupplungskoben 45 enthalten, die einen kompakten Strömungskreislauf in radial durchgängigen Aussparungen 183, wie sie beispielsweise in Fig. 7 gezeigt sind, ermöglichen, ohne dass hierbei eine Restleckage in die Steuerkammer 77 erfolgt.

Die Abdichtung 186 weist, wie Fig. 9 zeigt, einen am Kupplungskolben 45 befestigen Abdichtungsträger 192 auf, der in einer Ausnehmung 194 ein Dichtmittel 196 aufnimmt, das in Kontakt mit dem Innenlamellenträger 75 steht und dadurch die Dichtwirkung ausübt. Gleichzeitig können, wie die in Fig. 9 eingezeichneten Pfeile zum Ausdruck bringen, die Aussparungen 183 in den Reibbelägen 67 durchströmt werden.

Auch Fig. 8 zeigt diese Konstruktion, allerdings in Verbindung mit einer Axialfeder 72, welche den Kupplungskolben 45 ungeachtet des jeweiligen Druckunterschiedes zwischen dem hydrodynamischen Kreis 104 und der Steuerkammer 77 stets leicht vorgespannt in einer axialen Position hält, in welcher ein Kontakt des Kupplungskolbens 45 über die Lamellenkupplung 66 mit der Reibfläche 71 an der abtriebsseitigen Gehäusewandung 35 sichergestellt ist.

Zurückkommend auf die Fig. 3 soll nachfolgend auch Aufbau und Funktionsweise des hydrodynamischen Kreises 104 sowie der Überbrückungskupplung 41 näher beschrieben werden.

Beginnend mit der Druckversorgung ist am gleichen Bauteil, in welchem die erste Steuerleitung 81 vorgesehen ist, also in einer Stützwelle 116, auch eine zweite Steuerleitung 85 angeschlossen, die in Axialbohrungen 86 mündet. Die Axialbohrungen sind, in Umfangsrichtung gesehen, gegenüber der in der Schnittebene liegenden ersten Steuerleitung 81 versetzt und, da außerhalb der Schnittebene liegend, strichliniert dargestellt. Die Stützwelle 116, die als Hohlwelle ausgebildet ist, umschließt ihrerseits die Getriebeeingangswelle 31, die über eine Verzahnung 124 eine Turbinennabe 122 drehfest, aber axial verschiebbar aufnimmt, und greift zudem über eine Verzahnung 120 drehfest an einem Freilauf 110 eines Leitrades 102 an. Radial innerhalb der Stützwelle 116 verbleibt ein Ringkanal 88 gegenüber der Getriebeeingangswelle 31, wobei in den Ringkanal 88 eine dritte Steuerleitung 87 mündet. Eine vierte Steuerleitung 89 führt dagegen zu einer in der Getriebeeingangswelle 31 vorgesehenen Mittenbohrung 90. Auch die Steuerleitungen 85, 87, 89 sind, ebenso wie die Steuerleitung 81, jeweils an die Druckversorgungsanlage 83 angeschlossen, sodass durch diese über die Steuerleitungen 85, 87, 89 die restlichen Teile der Kupplungsanordnung 3 mit Druck beaufschlagt sowie mit frischem viskosen Fördermedium versorgt werden können.

Das Pumpenrad 51, dessen Pumpenradschale 92 mit Pumpenradschaufeln 94 versehen ist, wirkt mit einem eine Turbinenradschale 98 sowie Turbinenradschaufeln 100 aufweisenden Turbinenrad 96 sowie mit einem Leitrad 102 zusammen. Pumpenrad 51, Turbinenrad 96 und Leitrad 102 bilden in bekannter Weise den hydrodynamischen Kreis 104 und umschließen einen Innentorus 106.

Es sind Leitradschaufeln 112 des Leitrades 102 auf einer Leitradnabe 108 vorgesehen, die auf dem bereits erwähnten Freilauf 110 angeordnet ist. Der Letztgenannte stützt sich einerseits über eine mit zeichnerisch nicht dargestellten Strömungsdurchlässen ausgebildeteAxiallage rung 114 an der Pumpenradnabe 49 und andererseits über eine ebensolche Axiallagerung 132 an der Turbinennabe 122 axial ab, die in einem radial äußeren Bereich zur Befestigung eines Turbinenradfußes 118 sowie zweier Deckbleche 126 mittels einer Nietverbindung 130 dient. Die Turbinennabe 122 stützt sich ihrerseits über eine Axiallagerung 134 an einer antriebsseitigen Gehäusewandungsnabe 144 der antriebsseitigen Gehäusewandung 33 ab. Nach radial innen hin ist die Turbinennabe 122 über eine Abdichtung 136 gegenüber der Getriebeeingangswelle 31 abgedichtet, nach radial außen durch eine Abdichtung 138 gegenüber der antriebsseitigen Gehäusewandungsnabe 144.

Über die Mittenbohrung 90 der Getriebeeingangswelle 31 eingeströmtes Fördermedium gelangt in einen zwischen antriebsseitiger Gehäusenabe 19 und antriebsseitiger Gehäusewandungsnabe 144 vorgesehenen Übergangsraum 140 und von diesem über Kanäle 146 in der Gehäusewandungsnabe 144 nach radial außen in eine Kammer 155, die axial zwischen der antriebsseitigen Gehäusewandung 33 und einem Kolben 154 der bereits erwähnten Überbrückungskupplung 41 angeordnet ist. Dieser zentrisch zur antriebsseitigen Gehäusewandung 33 angeordnete Kolben 54 ist mit seiner von der Kammer 155 abgewandten Seite dem hydrodynamischen Kreis 104 zugewandt und in Abhängigkeit von den Druckverhältnissen im hydrodynamischen Kreis 104 sowie in der Kammer 155 zum Ein- oder Ausrücken der Überbrückungskupplung 41 zwischen zwei unterschiedlichen axialen Grenzstellungen bewegbar. Der Kolben 154 ist mittels eines auf der Gehäusewandungsnabe 44 gelagerten Kolbenfußes 152 axial verschiebbar, wobei eine im Kolbenfuß 152 eingelassene Kolbendichtung 150 ihre Abdichtfunktion gegenüber der Gehäusewandungsnabe 44 wahrnimmt. Im radial äußeren Bereich des Kolbens 154 ist dieser ebenfalls abgedichtet geführt und kommt über eineTellerfeder 158 axialelastisch an einer Druckplatte 146 in Anlage.

Die Druckplatte 146 ist, ebenso wie eine Zwischenlamelle 160, an einem an der antriebsseitigen Gehäusewandung 33 sowie am Widerlager 39 befestigten Zapfen 162 drehfest aufgenommen und als Außenlamelle 164 einer Lamellenkupplung 148 wirksam, die zudem über Innenlamellen 165 verfügt, die jeweils über eine Verzahnung 166 mit einer Nabenscheibe 168 eines Torsionsschwingungsdämpfers 156 verbunden sind. Diese Nabenscheibe 168, die als Eingangsdämpferteil 169 des Torsionsschwingungsdämpfers 156 wirksam ist, steht über einen Umfangsfedersatz 170 mit den bereits erwähnten Deckblechen 126 in Wirkverbindung, wobei die letztgenannten als Ausgangsdämpferteil 172 des Torsionsschwingungsdämpfers 156 dienen. Anschläge 174 begrenzen die Drehwinkel-Relativauslenkbarkeit von Eingangsdämpferteil 169 und Ausgangsdämpferteil 172 zueinander. Außerdem ist eine Reibvorrichtung 176 mit einem Reibelement 178 vorhanden , das mit dem antriebsseitigen Deckblech 126 des Eingangsdämpferteils 169 in Drehmitnahmeverbindung steht, und an der Nabenscheibe 168 des Ausgangsdämpferteils 172 durch eine Axialfeder 180 in Anlage gehalten wird, wobei diese Axialfeder 180 im Anlagebereich zwischen dem antriebsseitigen Deckblech 126 und dem Reibelement 178 angeordnet ist. Das Reibelement 178 kann sich an einer Reibfläche 181 an der Nabenscheibe 168 abstützen, die unter der Wirkung der Axialfeder 180 wiederum am abtriebsseitigen Deckblech 126 über eine weitere Reibfläche 182 in Anlage kommt.

### Bezugszeichen

- 1: Antriebsstrang
- 3: Kupplungsanordnung
- 5: Kupplungsgehäuse
- 7: Befestigungselemente
- 9: Kupplungselement
- 11: Antrieb
- 13: Brennkraftmaschine
- 15: Drehachse
- 17: Lagerzapfen
- 19: antriebsseitige Gehäusenabe
- 21: Zentrierführung
- 23: abtriebsseitige Gehäusenabe
- 25: Getriebe
- 27: Zahnrad
- 29: Abtriebsorgan
- 31: Getriebeeingangswelle
- 33: antriebsseitige Gehäusewandung
- 35: abtriebsseitige Gehäusewandung
- 37: Gehäuseaußenschale
- 39: Widerlager
- 41: Überbrückungskupplung
- 43: Kupplungsvorrichtung
- 44: Kupplungskolbenfuß
- 45: Kupplungskolben
- 46: Trennwand
- 47: Verzahnung
- 49: Pumpenradnabe
- 51: Pumpenrad
- 53: Lagerung
- 55, 57: Abdichtung
- 58: Axialanschlag
- 59: Zapfen
- 61: Bohrungen
- 62: Außenlamellenträger
- 63: Bohrungen
- 65: Innenlamellen
- 66: Lamellenkupplung
- 67: Reibbeläge
- 69: Reibfläche
- 71: Gegenreibfläche
- 72: Axialfeder
- 73: Abdichtung
- 74: Abstützung
- 75: Innenlamellenträger
- 76: Verzahnung
- 77: Steuerkammer
- 79: Anschlüsse
- 81: erste Steuerleitung
- 83: Druckversorgungsanlage
- 85: zweite Steuerleitung
- 86: Axialbohrungen
- 87: dritte Steuerleitung
- 88: Ringkanal
- 89: vierte Steuerleitung
- 90: Mittenbohrung
- 92: Pumpenradschale
- 94: Pumpenradschaufeln
- 96: Turbinenrad
- 98: Turbinenradschale
- 100: Turbinenradschaufeln
- 102: Leitrad
- 104: hydrodynamischer Kreis
- 106: Innentorus

- 108: Leitradnabe
- 110: Freilauf
- 112: Leitradschaufeln
- 114: Axiallagerung
- 116: Stützwelle
- 118: Turbinenradfuß
- 120: Verzahnung
- 122: Turbinennabe
- 124: Verzahnung
- 126: Deckbleche
- 130: Nietverbindung
- 132, 134: Axiallagerung
- 136, 138: Abdichtung
- 140: Übergangsraum
- 144: Gehäusewandungsnabe
- 146: Druckplatte
- 148: Lamellenkupplung
- 150: Kolbendichtung
- 152: Kolbenfuß
- 154: Kolben
- 155: Kammer
- 156: Torsionsschwingungsdämpfer
- 158: Tellerfeder
- 160: Zwischenlamelle
- 162: Zapfen
- 164: Außenlamelle
- 165: Innenlamelle
- 166: Verzahnung
- 168: Nabenscheibe
- 169: Eingangsdämpferteil
- 170: Umfangsfederteil
- 172: Ausgangsdämpferteil
- 174: Anschläge
- 176: Reibvorrichtung
- 178: Reibelement
- 180: Axialfeder
- 181: Reibfläche
- 182: Reibfläche
- 183: Aussparungen
- 184: unterbrechungsfreier Belaganteil
- 186: Abdichtung
- 190: Anbindung.
- 191: Zapfen
- 192: Abdichtungsträger
- 193: Anbindungsstumpf
- 194: Ausnehmung
- 196: Dichtmittel

## Patentansprüche

1. Hydrodynamische Kupplungsanordnung mit zumindest einem Pumpenrad und einem Turbinenrad zur Bildung eines hydrodynamischen Kreises in einem Kupplungsgehäuse, das mit seiner einem Antrieb, wie beispielsweise einer Brennkraftmaschine, zugewandten antriebsseitigen Gehäusewandung (33) mit dem Antrieb verbunden ist, und mittels einer innerhalb des Kupplungsgehäuses angeordneten Kupplungsvorrichtung mit dem Pumpenrad in Wirkverbindung versetzbar oder bezüglich dieser Wirkverbindung vom Pumpenrad trennbar ist, wobei die Kupplungsvorrichtung über eine durch einen Kupplungskolben (45) oder unter dessen Beteiligung gebildete Trennwand (46) verfügt, die einerseits den hydrodynamischen Kreis (104) begrenzt, und anderenseits eine Steuerkammer (77) für die Kupplungsvorrichtung zwischen sich und der einem Getriebe zugekehrten abtriebsseitigen Gehäusewandung (35) einschließt, die über eine erste Steuerleitung (81) mit einer Druckversorgungsanlage (83) verbunden ist,
**dadurch gekennzeichnet, dass**
dem Kupplungskolben (45) zumindest eine Reibfläche (69) zugeordnet ist, die, bei Beaufschlagung des Kupplungskolbens (45) in Richtung zur abtriebsseitigen Gehäusewandung (35), als Abdichtung (73) zwischen dem hydrodynamischen Kreis (104) und der Steuerkammer (77) wirksam ist, und die Steuerkammer (77) maximal mit einem Steuerdruck beaufschlagbar ist, welcher dem im hydrodynamischen Kreis (104) herrschenden Druck im wesentlichen entspricht.

2. Hydrodynamische Kupplungsanordnung nach Anspruch 1,
**dadurch gekennzeichnet, dass**
die Steuerkammer (77) für die Kopplungsanordnung (3) durch die Druckversorgungsanlage (83) zwischen dem Steuerdruck und einem demgegenüber geringeren Restdruck umschaltbar ist.

3. Hydrodynamische Kupplungsanordnung nach Anspruch 2,
**dadurch gekennzeichnet, dass**
der Restdruck in der Steuerkammer (77) im Wesentlichen dem Atmosphärendruck entspricht.

4. Hydrodynamische Kupplungsanordnung nach einem der Ansprüche 1 bis 3,
**dadurch gekennzeichnet, dass**
dem Kupplungskolben (45) zumindest eine Abdichtung (73) zur druckdichten Trennung der Steuerkammer (77) vom hydrodynamischen Kreis (104) zugeordnet ist.

5. Hydrodynamische Kupplungsanordnung nach Anspruch 4,
**dadurch gekennzeichnet, dass**
die dem Kupplungskolben (45) zugeordnete Abdichtung (73) zumindest eine exakt vorbestimmte Restleckage zwischen dem hydrodynamischen Kreis (104) und der Steuerkammer (77) zulässt.

6. Hydrodynamische Kupplungsanordnung nach Anspruch 1,
**dadurch gekennzeichnet, dass**
die Reibfläche (69) als Reibbelag (67) ausgebildet ist.

7. Hydrodynamische Kupplungsanordnung nach Anspruch 6,
**dadurch gekennzeichnet, dass**
der Reibbelag (67) an einer Radialseite mit zum Durchfluss von Kühlmedium bestimmten Aussparungen (183) und an der anderen Radialseite mit einem in Umfangsrichtung im wesentlichen unterbrechungsfreien Belaganteil (184) versehen ist.

8. Hydrodynamische Kupplungsanordnung nach Anspruch 6,
**dadurch gekennzeichnet, dass**
der Reibbelag (67) in Radialrichtung durchgängig mit zum Durchfluss von Kühlmedium bestimmten Aussparungen (183) versehen ist.

9. Hydrodynamische Kupplungsanordnung nach Anspruch 8,
**dadurch gekennzeichnet, dass**
dem Reibbelag (67) im wesentlichen radial innerhalb desselben eine zwischen dem Kupplungskolben (45) und der abtriebsseitigen Gehäusewandung (35) wirksame zweite Abdichtung (186) zugeordnet ist.

10. Hydrodynamische Kupplungsanordnung nach Anspruch 9,
**dadurch gekennzeichnet, dass**
die zweite Abdichtung (186) mit im wesentlichen radial innerhalb des Reibbelages (67) im Kupplungskolben (45) vorgesehenen Strömungsdurchlässen (188) zusammenwirkt.

11. Hydrodynamische Kupplungsanordnung nach Anspruch 9 oder 10,
**dadurch gekennzeichnet, dass**
die zweite Abdichtung (186) zwischen der der Steuerkammer (77) zugewandten Seite des Kupplungskolbens (45) und dem Innenlamellenträger (75) für die Innenlamelle (65) vorgesehen ist.

12. Hydrodynamische Kupplungsanorcinung nach Anspruch 11,
**dadurch gekennzeichnet, dass**
die zweite Abdichtung (186) über einen am Kupplungskolben (45) befestigten Abdichtungsträger (192) verfügt, an welchem, vorzugsweise in einer Ausnehmung (194), ein Dichtmittel (196) aufgenommen ist.

13. Hydrodynamische Kupplungsanordnung nach einem der Ansprüche 1 bis 12,
**dadurch gekennzeichnet, dass**
an zumindest einer Lamelle (65) der Lamellenkupplung (66) an einer Reibfläche (69) und/oder in einem Reibbelag (67) weitere Strömungsdurchflüsse (188) vorgesehen sind.

14. Hydrodynamische Kupplungsanordnung nach einem der Ansprüche 1 bis 13,
**dadurch gekennzeichnet, dass**
der Kupplungskolben (45) bei drehfester Aufnahme wenigstens einer Außenlamelle (63) der Lamellenkupplung (66) mit einer Pumpenradnabe (49) in drehfester Verbindung steht, und im radial inneren Bereich über einen Kupplungskolbenfuß (44) verfügt, der über eine Axialverzahnung (47) mit dem den Kupplungskolben (45) drehsichemden Bauteil (23,49) in Wirkverbindung steht.

15. Hydrodynamische Kupplungsanordnung nach Anspruch 14,
**dadurch gekennzeichnet, dass**
dem Kupplungskolbenfuß (44) ein an der abtriebsseitigen Gehäusenabe (23) fixierter Axialanschlag (58) zur axialen Wegbegrenzung des Kupplungskolbens (45) in Richtung zum Pumpenrad (51) zugeordnet ist.

16. Hydrodynamische Kupplungsanordnung nach Anspruch 15,
**dadurch gekennzeichnet, dass**
der Kupplungskolben (45) durch eine Axialfeder (72) in Richtung zur abtriebsseitigen Gehäusewandung (35) mit einer Vorspannung beaufschlagbar ist, wobei sich die Axialfeder (72) an dem Axialanschlag (58) abstützt.

17. Hydrodynamische Kupplungsanordnung nach einem der Ansprüche 14 bis 16,
**dadurch gekennzeichnet, dass**
der Kupplungskolben (45) gegenüber dem ihn drehgesichert aufnehmenden Bauteil (23, 49) über eine radial innere Abdichtung (55) aufgenommen ist.

18. Hydrodynamische Kupplungsanordnung nach einem der Ansprüche 1 bis 17,
**dadurch gekennzeichnet, dass**
die abtriebsseitigen Gehäusenabe (23) Anschlüsse (79) zur Verbindung der Steuerkammer (77) mit der Druckversorgungsanlage (83) aufweist.

## Claims

1. Hydrodynamic clutch arrangement having at least one impeller and one turbine wheel for forming a hydrodynamic circuit in a clutch housing which is connected to the drive by way of its drive-side housing wall (33) which faces a drive, such as an internal combustion engine, and can be operatively connected to the impeller by means of a clutch apparatus which is arranged within the clutch housing or can be disconnected from the impeller with regards to this operative connection, the clutch apparatus having a dividing wall (46) which is formed by a clutch piston (45) or with the aid of the latter, which dividing wall (46) firstly delimits the hydrodynamic circuit (104) and secondly encloses a control chamber (77) for the clutch apparatus between the said dividing wall (46) and the output-side housing wall (35) which faces a gearbox and which is connected to a pressure supply system (83) via a first control line (81), **characterized in that** the clutch piston (45) is assigned at least one friction face (69) which, when the clutch piston (45) is loaded in the direction of the output-side housing wall (35), is active as a seal (73) between the hydrodynamic circuit (104) and the control chamber (77), and the control chamber (77) can be loaded at most with a control pressure which corresponds substantially to the pressure which prevails in the hydrodynamic circuit (104).

2. Hydrodynamic clutch arrangement according to Claim 1, **characterized in that** the control chamber (77) for the coupling arrangement 3 can be switched over by the pressure supply system (83) between the control pressure and a residual pressure which is lower than the said control pressure.

3. Hydrodynamic clutch arrangement according to Claim 2, **characterized in that** the residual pressure in the control chamber (77) corresponds substantially to atmospheric pressure.

4. Hydrodynamic clutch arrangement according to one of Claims 1 to 3, **characterized in that** the clutch piston (45) is assigned at least one seal (73) for the pressure-tight division of the control chamber (77) from the hydrodynamic circuit (104).

5. Hydrodynamic clutch arrangement according to Claim 4, **characterized in that** the seal (73) which is assigned to the clutch piston (45) permits at least an exactly predefined residual leakage between the hydrodynamic circuit (104) and the control chamber (77).

6. Hydrodynamic clutch arrangement according to Claim 1, **characterized in that** the friction face (69) is configured as a friction lining (67).

7. Hydrodynamic clutch arrangement according to Claim 6, **characterized in that** the friction lining (67) is provided on one radial side with cut-outs (183) which are intended for the throughflow of cooling medium and is provided on the other radial side with a lining portion (184) which is substantially free of apertures in the circumferential direction.

8. Hydrodynamic clutch arrangement according to Claim 6, **characterized in that** the friction lining (67) is provided continuously in the radial direction with cut-outs (183) which are intended for the throughflow of cooling medium.

9. Hydrodynamic clutch arrangement according to Claim 8, **characterized in that** the friction lining (67) is assigned, substantially radially within itself, a second seal (186) which is active between the clutch piston (45) and the output-side housing wall (35).

10. Hydrodynamic clutch arrangement according to Claim 9, **characterized in that** the second seal (186) interacts with flow passages (188) which are provided substantially radially within the friction lining (67) in the clutch piston (45).

11. Hydrodynamic clutch arrangement according to Claim 9 or 10, **characterized in that** the second seal (186) is provided between that side of the clutch piston (45) which faces the control chamber (77) and the inner disc carrier (75) for the inner disc (65).

12. Hydrodynamic clutch arrangement according to Claim 11, **characterized in that** the second seal (186) has a seal carrier (192) which is fastened to the clutch piston (45) and on which a sealing means (196) is held, preferably in a recess (194).

13. Hydrodynamic clutch arrangement according to one of Claims 1 to 12, **characterized in that** further flow passages (188) are provided on at least one disc (65) of the multiple disc clutch (66) on a friction face (69) and/or in a friction lining (67).

14. Hydrodynamic clutch arrangement according to one of Claims 1 to 13, **characterized in that** the clutch piston (45) is connected fixedly in terms of rotation to an impeller hub (49) when at least one outer disc (63) of the multiple disc clutch (66) is held fixedly in terms of rotation, and has a clutch-piston base (44) in the radially inner region, which clutch-piston base (44) is operatively connected via an axial toothing system (47) to the component (23, 49) which secures the clutch piston (45) rotationally.

15. Hydrodynamic clutch arrangement according to Claim 14, **characterized in that** the clutch-piston base (44) is assigned an axial stop (58) which is fixed to the output-side housing hub (23), for the axial travel limitation of the clutch piston (45) in the direction of the impeller (51).

16. Hydrodynamic clutch arrangement according to Claim 15, **characterized in that** the clutch piston (45) can be loaded with a prestress by an axial spring (72) in the direction of the output-side housing wall (35), the axial spring (72) being supported on the axial stop (58).

17. Hydrodynamic clutch arrangement according to one of Claims 14 to 16, **characterized in that** the clutch piston (45) is held via a radially inner seal (55) with respect to the component (23, 49) which holds it in a rotationally secured manner.

18. Hydrodynamic clutch arrangement according to one of Claims 1 to 17, **characterized in that** the output-side housing hub (23) has connections (79) for connecting the control chamber (77) to the pressure supply system (83).

## Revendications

1. Agencement d'accouplement hydrodynamique avec au moins une roue de pompe et une roue de turbine pour former un circuit hydrodynamique dans un carter d'accouplement qui, par sa paroi de carter (33) côté menant, tournée vers un entraînement comme par exemple un moteur à combustion interne, est relié à l'entraînement, et qui, au moyen d'un dispositif d'accouplement disposé à l'intérieur du carter d'accouplement peut être mis en liaison fonctionnelle avec la roue de pompe ou séparé de la roue de pompe quant à cette liaison fonctionnelle, sachant que le dispositif d'accouplement dispose d'une paroi séparatrice (46) qui est formée par un piston d'accouplement (45) ou avec la participation de ce dernier et qui d'une part délimite le circuit hydrodynamique (104) et d'autre part inclut une chambre de commande (77) pour le dispositif d'accouplement entre elle et la paroi de carter (35) côté mené, tournée vers une transmission, qui est reliée par l'intermédiaire d'une première conduite de commande (81) à un système (83) d'alimentation en pression, **caractérisé en ce qu'**au moins une surface de friction (69) est associée au piston d'accouplement (45), laquelle, lors de la sollicitation du piston d'accouplement (45) en direction de la paroi de carter (35) côté mené, est active comme moyen d'étanchéité (73) entre le circuit hydrodynamique (104) et la chambre de commande (77), et la chambre de commande (77) peut être sollicitée au maximum par une pression de commande qui correspond sensiblement à la pression régnant dans le circuit hydrodynamique (104).

2. Agencement d'accouplement hydrodynamique selon la revendication 1, **caractérisé en ce que** la chambre de commande (77) pour l'agencement d'accouplement 3 peut être commutée par le système (83) d'alimentation en pression entre la pression de commande et une pression résiduelle inférieure à celle-ci.

3. Agencement d'accouplement hydrodynamique selon la revendication 2, **caractérisé en ce que** la pression résiduelle dans la chambre de commande (77) correspond sensiblement à la pression atmosphérique.

4. Agencement d'accouplement hydrodynamique selon l'une quelconque des revendications 1 à 3, **caractérisé en ce qu'**au moins un moyen d'étanchéité (73) est associé au piston d'accouplement (45) afin de séparer la chambre de commande (77) du circuit hydrodynamique (104) en étanchéité à la pression.

5. Agencement d'accouplement hydrodynamique selon la revendication 4, **caractérisé en ce que** le moyen d'étanchéité (73) associé au piston d'accouplement (45) autorise au moins une fuite résiduelle exactement prédéfinie entre le circuit hydrodynamique (104) et la chambre de commande (77).

6. Agencement d'accouplement hydrodynamique selon la revendication 1, **caractérisé en ce que** la surface de friction (69) est réalisée sous forme de garniture de friction (67).

7. Agencement d'accouplement hydrodynamique selon la revendication 6, **caractérisé en ce que** la garniture de friction (67) est dotée sur un côté radial d'évidements (183) destinés au passage de réfrigérant, et sur l'autre côté radial d'une partie de garniture (184) essentiellement dépourvue d'interruptions en direction circonférentielle.

8. Agencement d'accouplement hydrodynamique selon la revendication 6, **caractérisé en ce que** la garniture de friction (67) est dotée d'évidements (183) traversants en direction radiale, destinés au passage de réfrigérant.

9. Agencement d'accouplement hydrodynamique selon la revendication 8, **caractérisé en ce qu'**un deuxième moyen d'étanchéité (186), actif entre le piston d'accouplement (45) et la paroi de carter (35) côté mené, est associé à la garniture de friction (67) essentiellement radialement à l'intérieur de celle-ci.

10. Agencement d'accouplement hydrodynamique selon la revendication 9, **caractérisé en ce que** le deuxième moyen d'étanchéité (186) coopère avec des passages d'écoulement (188) prévus dans le piston d'accouplement (45) essentiellement radialement à l'intérieur de la garniture de friction (67).

11. Agencement d'accouplement hydrodynamique selon la revendication 9 ou 10, **caractérisé en ce que** le deuxième moyen d'étanchéité (186) est prévu entre le côté du piston d'accouplement (45) qui est tourné vers la chambre de commande (77) et le porte-disques intérieur (75) pour les disques intérieurs (65).

12. Agencement d'accouplement hydrodynamique selon la revendication 11, **caractérisé en ce que** le deuxième moyen d'étanchéité (186) dispose d'un support (192) de moyen d'étanchéité, qui est fixé sur le piston d'accouplement (45) et qui reçoit un joint d'étanchéité (196) de préférence dans un évidement (194).

13. Agencement d'accouplement hydrodynamique selon l'une quelconque des revendications 1 à 12, **caractérisé en ce que** d'autres passages d'écoulement (188) sont prévus sur au moins un disque (65) de l'accouplement multidisques (66), sur une surface de friction (69) et/ou dans une garniture de friction (67).

14. Agencement d'accouplement hydrodynamique selon l'une quelconque des revendications 1 à 13, **caractérisé en ce que** le piston d'accouplement (45), en cas de réception en solidarité de rotation d'au moins un disque extérieur (63) de l'accouplement multidisques (66), est lié en rotation avec un moyeu (49) de roue de pompe et dispose dans la région radialement intérieure d'une base (44) de piston d'accouplement qui se trouve en liaison fonctionnelle, par l'intermédiaire d'une denture axiale (47), avec l'élément (23, 49) bloquant en rotation le piston d'accouplement (45).

15. Agencement d'accouplement hydrodynamique selon la revendication 14, **caractérisé en ce qu'**une butée axiale (58), fixée en position sur le moyeu de carter (23) côté mené, est associée à la base (44) de piston d'accouplement afin de limiter axialement la course du piston d'accouplement (45) en direction de la roue de pompe (51).

16. Agencement d'accouplement hydrodynamique selon la revendication 15, **caractérisé en ce que** le piston d'accouplement (45) est sollicité par un ressort axial (72) avec une précontrainte en direction de la paroi de carter (35) côté mené, le ressort axial (72) s'appuyant contre la butée axiale (58).

17. Agencement d'accouplement hydrodynamique selon l'une quelconque des revendications 14 à 16, **caractérisé en ce que** le piston d'accouplement (45) est logé, par rapport à l'élément (23, 49) qui le reçoit bloqué en rotation, par l'intermédiaire d'un moyen d'étanchéité (55) radialement intérieur.

18. Agencement d'accouplement hydrodynamique selon l'une quelconque des revendications 1 à 17, **caractérisé en ce que** le moyeu de carter (23) côté mené présente des raccordements (79) pour relier la chambre de commande (77) au système (83) d'alimentation en pression.
